# EUROPÄISCHE PATENTSCHRIFT

(11) **EP 0 517 162 B1**
(45) Veröffentlichungstag und Bekanntmachung des Hinweises auf die Patenterteilung: **06.03.1996**
(21) Anmeldenummer: 92109291.2
(22) Anmeldetag: 02.06.1992
(51) Int. Cl.: B23Q 35/04

(54) **Bohr- und Fräsvorrichtung**
Boring and mortising device
Fraiseuse-aléseuse

(30) Priorität: 02.06.1991 DE 9106658 U
(43) Veröffentlichungstag der Anmeldung: 09.12.1992
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard, Dr.

(56) Entgegenhaltungen:
- CH-A- 266 710
- DE-C- 678 177
- FR-A- 1 595 099
- FR-A- 2 050 468
- GB-A- 1 069 481
- GB-A- 2 177 632
- US-A- 1 396 993
- US-A- 3 546 978
- US-A- 3 904 185
- PATENT ABSTRACTS OF JAPAN vol. 12, no. 57 (M-670)(2904) 20. Februar 1988 & JP-A-62 203 742( MITSUBISHI ELECTRIC ) 8. September 1987

## Beschreibung

Die Erfindung bezieht sich auf eine Vorrichtung zum Herstellen eines vorgegebenen Bohr- oder Fräsbildes in Werkstücke gemäß dem Oberbegriff des Anspruches 1.

Aus der CH-A-266 710 ist eine Oberfräse bekannt mit in einem Grundgestell angeordneter Säule. An der Säule ist ein in vertikaler Richtung verstellbarer Ausleger gehalten, an dessen freien Ende die Bearbeitungseinheit angeordnet ist. Im mittleren Bereich des Auslegers befindet sich ein Kopierstift, welcher mit einer auf dem Support für die Werkstücke angeordneten Schablone zusammenwirkt. Zum Bearbeiten der Werkstücke wird der Support verfahren. Der Ausleger ist drehfest an der Säule angeordnet und mit einem in der Säule geführten Gegengewicht belastet, wodurch der Kopierstift in die entsprechenden Ausnehmungen der Schablone gedrückt wird.

Auch ist bereits eine Kopierfräsmaschine zum Einfräsen von Aussparungen in Holz, Kunststoff oder Metall bekannt, bei welcher die Bearbeitungseinheit zum Bearbeiten des Werkstückes mittels eines Kreuzschlittens verfahrbar ist.

Die bekannte Kopierfräsmaschine ist mit einer Abtasteinrichtung zum Übertragen eines vorgegebenen Bohr- und/oder Fräsbildes auf das Werkstück versehen, wobei ein mit dem Kreuzschlitten verbundener Fühler eine das jeweilige Bohr- oder Fräsbild in Form von Ausnehmungen wiedergebene Schablone abtastet und bei Eingreifen in eine der Ausnehmungen der Schablone die zugeordnete Arbeitspostion der Werkzeugeinheit festlegt. Danach wird die Werkzeugeinheit abgesenkt und die Bohrung oder Fräsung in das Werkstück eingebracht. Das Abtasten der Schablone und Absenken der Werkzeugeinheit erfolgt bei dieser bekannten Kopierfräse automatisch oder mittels Handhebeln. Diese Kopierfräsmaschinen werden jedoch vornehmlich bei einer fabrikmäßigen Massenproduktion eingesetzt und sind weniger für kleinere Handwerksbetriebe bestimmt, bei denen mitunter eine größere Anzahl von unterschiedlichen Bohr- und/oder Fräsbildern zur Bearbeitung kommen. Insoweit ist aber bei der bekannten Kopierfräsmaschine das Herstellen der das jeweilige Bohr- und/oder Fräsbild in Form von Ausnehmungen wiedergebenden Schablone mit einigem Aufwand verbunden.

Davon ausgehend liegt der Erfindung die Aufgabe zugrunde, eine Vorrichtung der eingangs genannten Art dahingehend weiterzuentwickeln, daß bei einem konstruktiv besonders einfachem und robustem Aufbau sowie vergleichsweise geringen Anschaffungskosten eine präzise Übertragung von beliebigen Bohr- oder Fräsbildern auf Werkstücke möglich ist und sich darüberhinaus die Kopierschablonen für die jeweiligen Bohr- und Fräsbilder einfach herstellen lassen.

Gelöst wird diese Aufgabe durch die Merkmale des kennzeichnenden Teils des Anspruches 1.

Mit der erfindungsgemäßen Vorrichtung läßt sich mühelos und schnell jedes beliebige durch die Schablone vorgegebene Bohr- oder Fräsbild auf das in der Aufnahme festgelegte Werkstück und ebenso auch auf mehrere Werkstücke übertragen. Durch die Verschwenkbarkeit der Werkzeugeinheit mit damit fest verbundenem Fühler der Abtasteinrichtung um zwei seitlich angeordnete vertikale Achsen läßt sich das Abfahren der Schablone einfach und bequem von Hand durchführen. Aufwendige Kreuzschlitten oder ggf. einstellbare Kopierschienen können dabei entfallen. Durch die Anordnung des Fühlers und des Werkzeuges jeweils im seitlichen Abstand zu der ersten Schwenkachse, wobei der Fühler außerhalb des Aufspannbereichs an dem Trägerteil gehalten ist, ermöglicht ein Verfahren von Werkzeugeinheit mit Abtasteinrichtung an nahezu jede beliebige Position der Schablone und damit an jede Position des zu bearbeitenden Werkstückes. Die erfindungsgemäße Vorrichtung zeichnet sich damit durch einen robusten und störungsunanfälligen Aufbau aus, verbunden mit geringen Anschaffungskosten, was sie gerade für den Einsatz in Handwerksbetrieben mit einer größeren zur Bearbeitung kommenden Anzahl von unterschiedlichen Bohr- und/oder Fräsbildern empfiehlt.

In einer ersten besonderen Ausführungform der Erfindung ist es vorgesehen, daß der Fühler lösbar in einer Halterung aufgenommen ist, in welche, ggf. mittels einer Bohrbüchse, eine Bohreinheit zum Bohren bzw. Fräsen der Ausnehmungen in die Schablone einsetzbar ist. Hierdurch gestaltet sich die Herstellung der Schablonen besonders einfach, wie dies gearade für kleinere Handwerksbetriebe verlangt wird. Dabei werden zunächst die Bohrungen oder Ausfräsungen an dem oder den in der Aufnahme festgelegten Werkstücken angerissen und danach die Bohrungen oder Fräsungen mit der Werkzeugeinheit bzw. mit dem entsprechenden Werkzeug eingebracht. Danach werden mit dem Werkzeug die einzelnen Arbeitspostionen in dem bzw. den Werkstücken abgefahren, wobei mittels der anstelle des Fühlers in die Halterung eingesetzten, ggf. manuell betätigbaren Bohreinheit bei Absenken der Werkzeugeinheit die das Bohr- bzw. Fräsbild wiedergebende Ausnehmungen bzw. Bohrungen in die Schablone eingebracht werden. Dabei kann in die Bohreinheit ggf. zunächst ein kleinerer Bohrer eingesetzt werden, um ein Verlaufen der in die Schablone einzubringenden Bohrungen zu vermeiden.

Die Werkzeugeinheit mit dem Fühler der Abtasteinrichtung kann im Bedarfsfalle auch radial zur Schwenkachse verfahrbar sein. Beispielsweise kann an der Schwenkachse ein Schwenkarm angelenkt sein, an welchem die Werkzeugeinheit mit Abtasteinrichtung radial zur Schwenkachse verschiebbar ist.

Nach einer Weiterbildung dieses Gedankens ist es nach der Erfindung vorgesehen, daß an der am Grundgestell angeordneten Schwenkachse ein Schwenkarm gelagert ist, an deren freien Ende die Drehachse gehalten ist. Damit sind die Dreh- und Schwenkbewegungen von Werkzeugeinheit und Abtasteinrichtung in konstruktiv besonders günstiger Weise voneinander entkoppelt und lassen sich unabhängig voneinander und gleichzeitig durchführen, was das Anfahren der einzelnen Tastpunkte auf der Schablone mit dem Fühler erleichtert und im Hinblick auf die Bearbeitungszeit des Werkstückes beschleunigt.

Erfindungsgemäß sollte der Halteteil für die Werkzeugeinheit und die Abtasteinrichtung an der Drehachse gelagert und längs der Drehachse verschiebbar sein, so daß sich die Absenk- und Hubbewegung der beiden Einheiten einfach und präzise durchführen läßt.

Nach einem weiteren Vorschlag der Erfindung ist der Fühler als sich in vertikaler Richtung erstreckender Taststift ausgebildet ist mit vorzugsweise konisch sich verjüngendem Stiftende. Diese mechanische Abtastung ermöglicht ein sicheres präzises Übertragen des auf der Schablone in Form von Ausnehmungen wiedergegebenen Bohr- oder Fräsbildes und erweist sich in dem mitunter rauhen Betrieb in der Metall-, Kunststoff- oder Holzverarbeitung als äußerst robust. Die konische Ausbildung des Stiftendes erleichtert das Auffinden und Eintauchen des Taststiftes in die jeweilige Ausnehmung der Schablone.

Nach einem besonderen Gedanken der Erfindung ist es auch vorgesehen, daß die Schablone mit die Ausnehmungen auf einem i. w. geschlossenen Weg miteinander verbindenden Führungsschienen, Anschlägen o. dgl. Führungseinrichtungen für den Fühler bzw. den Taststift versehen ist. Hierdurch ist das Auffinden der einzelnen Tastpunkte auf der Schablone nochmals vereinfacht und die Taktzeit zwischen Einbringen der Bohrungen bzw. Fräsungen in das oder die Werkstücke verkürzt. Zudem ermöglicht diese Ausbildung auch eine maschinelle Steuerung der Maschine.

Nach einer wiederum anderen Ausgestaltung der Erfindung sind der vorzugsweise höhenverstellbare Taststift und die Schablone bzgl. der Aufnahmeebene der Werkstücke derart angeordnet, daß der Taststift bei einem relativ zur Arbeitsstelle des Werkzeuges geringeren Absenkhub in die jeweilige Ausnehmung der Schablone eingreift. Da sich der Taststift in Nicht-Taststellung auf der Oberseite der Schablone abstützt und erst in Taststellung unter Eingreifen in die entsprechende Ausnehmung ein vollständiges Absenken der Werkzeugeinheit ermöglich, ist eine Fehlbearbeitung der Werkstücke und damit ein Ausschuß vermieden.

Eine weitere Vereinfachung der Handhabung ergibt sich erfindungsgemäß dadurch, daß die Werkzeugeinheit mit der Abtasteinrichtung gegen die Kraft eines Federspeichers in Arbeitsstellung absenkbar ist.

Vorteilhafterweise ist der Halteteil für die Werkzeugeinheit und die Abtasteinrichtung mittels wenigstens einem Hülsenteil verdrehbar und längsverschieblich an der Drehachse zwischen zwei in Abstand übereinander die Drehachse fixierenden Wandungsfortsätzen des Schwenkarms gehalten. Die Wandungsfortsätze des Schwenkarms bilden damit gleichzeitig Anschläge für das wenigstens eine Hülsenteil des die Werkzeugeinheit und die Abtasteinrichtung aufnehmenden Halteteils, so daß in sicherheitstechnisch günstiger Weise die Maschinenteile aneinandergehalten und nur mittels Werkzeugen lösbar sind.

Im Hinblick auf eine kompakte und robuste Konstruktion der Vorrichtung ist es nach der Erfindung auch vorgesehen, daß die Druckfeder auf die Drehachse aufgeschoben ist und sich unter Ausübung einer Druckkraft auf den wenigstens einen Hülsenteil in Richtung der oberen Ausgangsstellung des Halteteils an einem der Wandungsfortsätze des Schwenkarms abstützt.

Eine weitere Vereinfachung der Handhabung ergibt sich erfindungsgemäß dadurch, daß die Werkzeugeinheit mit Abtasteinrichtung mittels eines sich am Grundgestell abstützenden und um eine vertikale Achse verschwenkbaren Gelenkhebels, vorzugsweise mittels eines Kniehebels, absenkbar ist.

Schließlich kann es sich nach einer Ausgestaltung der Erfindung auch empfehlen, daß die Aufnahme für die Werkstücke als Spann- und/oder Klemmeinrichtung ausgebildet ist.

Die Erfindung wird nachfolgend anhand des in der Zeichnung dargestellten Ausführungsbeispiels näher beschrieben.

Es zeigen:
- Figur 1: eine mögliche Ausführungsform einer Vorrichtung nach der Erfindung in einer stirnseitigen Ansicht, teilweise geschnitten,
- Figur 2: eine Seitenansicht der Vorrichtung gemäß Figur 1, teilweise geschnitten,

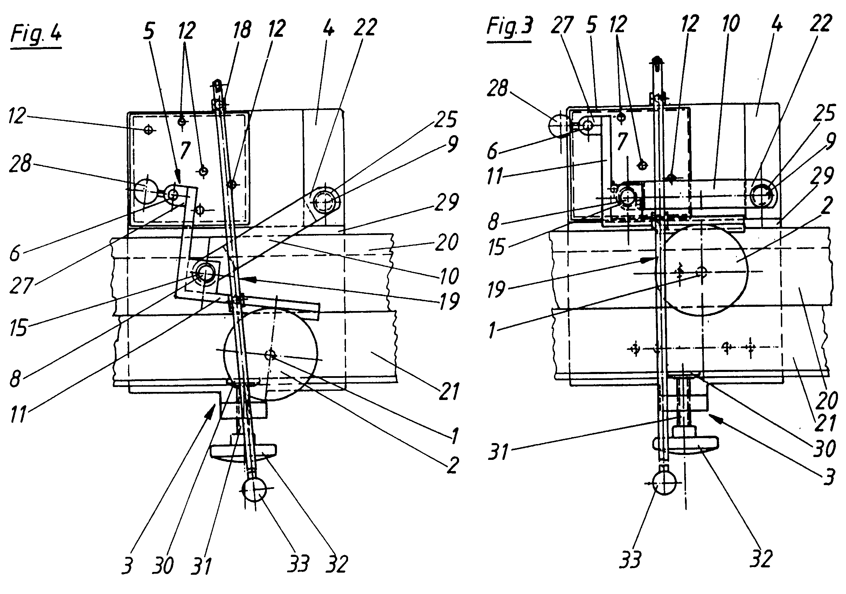

- Figur 3: eine Draufsicht auf die Vorrichtung gemäß Figuren 1 und 2 und
- Figur 4: eine Draufsicht auf die Vorrichtung gemäß Figuren 1 und 2, jedoch in einer gegenüber Figur 3 anderen Arbeitsposition.

Die Vorrichtung gemäß den Figuren weist i. w. eine Werkzeugeinheit 2 mit Bohrwerkzeug 1, eine Abtasteinrichtung 5 mit als Taststift ausgebildetem Fühler 6, eine das jeweilige Bohr- oder Fräsbild wiedergebende Schablone 7, ein Grundgestell 4 mit als Spanneinrichtung ausgebildeter Aufnahme 3 zum Festlegen der zu bearbeitenden Werkstücke 20, 21 und einen Kniehebel 19 zum Absenken der Werkzeugeinheit 2 bzw. seines Bohrwerkzeuges 1 in Arbeitsstellung an dem jeweiligen Werkstück 20, 21 auf. Bei dem hier gewählten Ausführungsbeispiel mittels der Vorrichtung Bohrungen für Schraubbolzen eines Türbandes in ein Tür- und ein Türrahmenprofil eingebracht werden, welche von den mit Bezugszeichen 20, 21 versehene Werkstücken dargestellt sind.

Im einzelnen ist der Aufbau der Vorrichtung so getroffen, daß die Werkzeugeinheit 2 und die Abtasteinrichtung 5 jeweils an einem Schenkel eines rechtwinkligen, plattenförmigen Halteteils 11 befestigt sind, welches mittels zwei Hülsenteilen 14, 15 an der Drehachse 8 schwenkbar und in Längsrichtung verschiebbar gehalten ist. Die Drehachse 8 ist wiederum am freien Ende eines an der Schwenkachse 9 gelagerten Schwenkarms 10 gehalten. Hierfür sind seitlich des Schwenkarms 10 jeweils zwei in Abstand übereinander angeordnete Wandungsfortsätze 16, 17 und 22, 23 angeformt, wobei mittels den Wandungsfortsätzen 16, 17 die Drehachse 8 drehfest an dem Schwenkarm 10 gehalten ist und mittels den beiden Wandungsfortsätzen 22, 23 auf der gegenüberliegenden Stirnseite des Schwenkarms 10 ihre Anlenkung an die Schwenkachse 9 erfolgt. Die Schwenkachse 9 ist wiederum in einer Buchse 24 an dem Grundgestell 4 gehalten. Die Schwenkachse 9 weist an ihrem freien Ende einen Bolzenkopf 25 auf, welcher als Anschlag für den oberen Wandungsfortsatz 23 des Schwenkarms 10 dient und somit ein Herausgleiten des Schwenkarms 10 aus der Schwenkachse 9 verhindert.

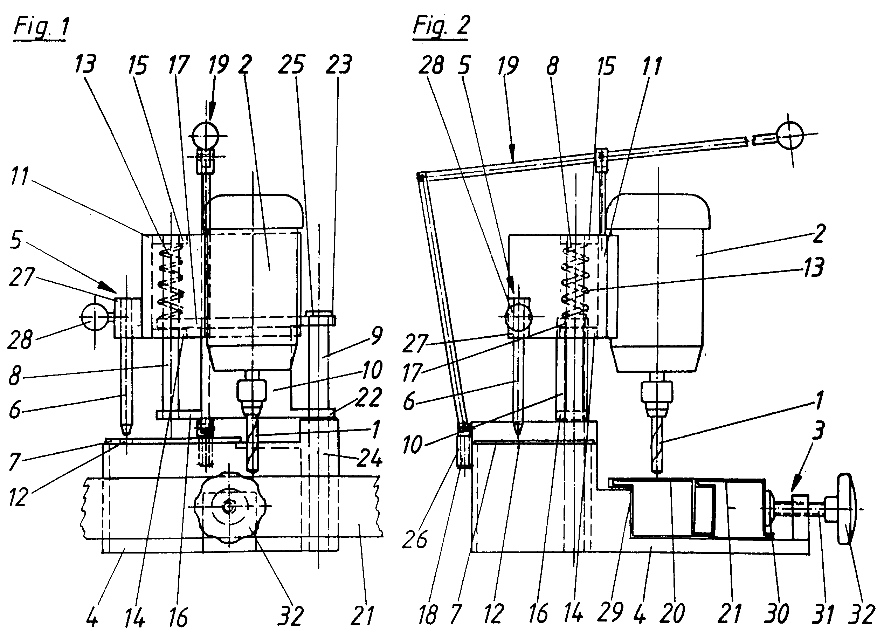

Wie insbesondere aus Figuren 1 und 2 ersichtlich, ist die Werkzeugeinheit 2 mit der Abtasteinrichtung 5 gegen die Kraft einer Druckfeder 13 in Arbeitsstellung an dem Werkstück 20, 21 absenkbar. Die Anordnung ist dabei im einzelnen so getroffen, daß die Druckfeder 13 auf die Drehachse 8 aufgeschoben und zwischen dem oberen Hülsenteil 15 des Halteteils 11 und dem zugeordneten oberen Wandungsfortsatz 17 des Schwenkarms 10 eingespannt ist. Der untere Hülsenteil 14 des Halteteils 11 befindet sich zwischen den beiden Wandungsfortsätzen 16, 17 des Schwenkarms 10, wodurch auch der Halteteil 11 gegen ein Herausgleiten aus der Schwenkachse 8 gesichert ist.

Der Halteteil 11 kann zusätzlich mit einer äußeren Abdeckung versehen sein, wodurch eine Verletzungsgefahr an den Konstruktionsteilen von Schwenkarm 10 und Halteteil 11 während des Absenkens und Anhebens der Werkzeugeinheit 2 vermieden ist. Die Befestigung von Werkzeugeinheit 2 und Abtasteinrichtung 5 an dem Halteteil 11 erfolgt dabei mittels (nicht dargestellten) Schraubbolzen, welche sich durch die Abdeckung erstrecken.

Der als Taststift ausgebildete Fühler 6 ist in seiner Längsrichtung einstellbar an einer mit dem einen Schenkel des Halteteils 11 befestigten Halterung 27 fixiert, welche gleichzeitig mit einem Haltegriff 28 zum Verfahren des Taststiftes 6 über die Schablone 7 versehen.

Die i. w. als Platte ausgebildete Schablone 7 ist lösbar an dem Grundgestell 4 befestigt. In die Schablone 7 sind zum Eingreifen des Taststiftes 6 ausgebildete Ausnehmungen 12 eingearbeitet, welche das auf die Werkstücke 20, 21 zu projezierende Bohr- bzw. Fräsbild wiedergeben.

Die am Grundgestell 4 angeordnete Aufnahme 3 für die Werkstücke 20, 21 ist bei dem hier gewählten Ausführungsbeispiel als Spanneinrichtung ausgebildet mit einem die Werkstücke 20, 21 gegen einen am Grundgestell 4 gebildeten Anschlag 29 pressenden Spannbacken 30, welcher mittels eines am Grundgestell 4 abgestützten Gewindestabes 31 mit äußerem Handrad 32 verstellbar ist.

Für die Absenkbewegung von Bohreinheit 2 und Abtasteinrichtung 5 ist ein sich am Grundgestell 4 abstützender und um eine vertikale Achse verschwenkbarer Kniehebel 19 vorgesehen mit am Hebelende angeordnetem Handknopf 33. Die Anlenkung des Kniehebels 19 am Grundgestell 4 erfolgt mittels eines Schwenkzapfens 18, welcher in eine Buchse 26 am Grundgestell 4 eingreift.

Um nun Bohrungen, bspw. für Schraubbolzen von Türbändern in ein Tür- und Türrahmenprofil einzubrigen, wird, nachdem die Profilstücke 20, 21 mittels der Aufnahme in ihrer entsprechenden Lage an dem Grundgestell 4 festgelegt sind und die das gewünschte Fräs- bzw. Bohrbild aufweisende Schablone 7 angebracht ist, mit einer Hand der Handgriff 33 des Kniehebels 19 erfaßt und die Werkzeugeinheit 2 mit Abtasteinrichtung 5 soweit niedergedrückt, bis der Taststift 6 mit seinem konisch sich verjüngenden Stiftende die Oberseite der Schablone 7 nahezu berührt. Gleichzeitig wird durch Ergreifen des Haltegriffs 28 an der Abtasteinrichtung 5 die Arbeitseinheit 2 mit Abtasteinrichtung 5 um die Drehachse 8 derart verdreht, bis, ggf. unter Verschwenken der Werkzeugeinheit 2 mit Abtasteinrichtung 5 mittels des Kniehebels 9, der Taststift 6 in eine der Ausnehmungen 12 der Schablone 7 eingreift. Danach wird die Werkzeugeinheit 2 mit Abtasteinrichtung 5 mittels des Kniehebels 19 weiter abgesenkt, bis sich das Bohrwerkzeug 1 in das entsprechende Profilstück 20, 21 einfräst. Nachdem diese Bohrung eingebracht ist, wird durch Entlastung des Kniehebels 19 infolge der Druckfeder 13 die Werkzeugeinheit 2 mit Abtasteinrichtung 5 und Taststift 6 in die obere Ausgangsstellung angehoben, so daß durch Verdrehen und ggf. weiteres Verschwenken der Abtasteinrichtung 5 ihr Taststift 6 in die nächste Ausnehmung 12 der Schablone 7 eingreift und eine weitere Bohrung in das Profilstück 20 oder 21 eingebracht werden kann. Durch sukzessives Abfahren aller Ausnehmungen 12 der Schablone 7 erfolgt dann eine vollständige Übertragung des jeweiligen Bohr- bzw. Fräsbildes auf die eingespannten Profilstücke 20, 21.

Die Herstellung des Bohr- bzw. Fräsbildes auf der Schablone 7 läßt sich in einfacher Weise dadurch erhalten, daß zunächst die Bohrungen oder Ausfräsungen auf dem oder den Werkstücken 20, 21 angerissen und danach die Bohrungen oder Fräsungen mit der Werkzeugeinheit 2 bzw. mit dem entsprechendem Werkzeug 1 in die Werkstücke 20, 21 eingebracht werden. Danach werden mit dem Werkzeug 1 die einzelnen Arbeitspositionen an dem oder den Werkstücken 20, 21 abgefahren, wobei mittels einer anstelle des Fühlers 6 in die Halterung 27 eingesetzten, ggf. manuell betätigbaren (nicht dargestellten) Bohreinheit bei Absenken der Werkzeugeinheit 2 die das Bohr- bzw. Fräsbild wiedergebende Ausnehmungen 12 bzw. Bohrungen in die Schablone 7 eingebracht werden. Dabei kann in diese Bohreinheit zunächst ein kleinerer Bohrer eingesetzt werden, um ein Verlaufen der in die Schablone 7 einzubringenden Bohrungen zu vermeiden.

Ersichtlich ist die beschriebene Vorrichtung nicht nur zum Einbringen von Bohrungen für Schraubbolzen von Türbändern in Tür- und Türrahmenprofile bestimmt, sondern läßt sich überall dort mit Erfolg einsetzen, wo es darauf ankommt, bei sich wiederholenden Arbeitsvorgängen mehrere Bohrungen oder Fräsungen in definierten Abständen reproduzierbar in Werkstücke einzubringen.

### Bezugszeichenliste

- 1: - Bohrwerkzeug
- 2: - Werkzeugeinheit
- 3: - Aufnahme
- 4: - Grundgestell
- 5: - Abtasteinrichtung
- 6: - Fühler, Taststift
- 7: - Schablone
- 8: - Drehachse
- 9: - Schwenkachse
- 10: - Schwenkarm
- 11: - Halteteil
- 12: - Ausnehmungen
- 13: - Druckfeder
- 14: - Hülsenteil
- 15: - Hülsenteil
- 16: - Wandungsfortsatz
- 17: - Wandungsfortsatz
- 18: - Achse
- 19: - Kniehebel
- 20: - Werkstück, Profilstück
- 21: - Werkstück, Profilstück
- 22: - Wandungsfortsatz
- 23: - Wandungsfortsatz
- 24: - Buchse
- 25: - Bolzenkopf
- 26: - Buchse
- 27: - Halterung
- 28: - Haltegriff
- 29: - Anschlag
- 30: - Spannbacke
- 31: - Gewindestab
- 32: - Handrad
- 33: - Handknopf

## Patentansprüche

1. Vorrichtung zum Herstellen eines vorgegebenen Bohr- oder Fräsbildes in Werkstücke aus Holz, Kunststoff oder Metall, wie beispielsweise der Bohrungen für Schraubbolzen von Türbändern in Tür- und/oder Türrahmenprofile, mit einem eine Aufnahme (3) zum Festlegen der Werkstücke aufweisenden Grundgestell (4), einer am Grundgestell (4) gehaltenen, wenigstens ein Bohr- und/oder Fräswerkzeug (1) aufweisenden und zum Bearbeiten von Werkstücken absenkbaren Werkzeugeinheit (2) und einer Abtasteinrichtung (5) mit einer das jeweilige Bohr- oder Fräsbild in Form von Ausnehmungen (12) wiedergebenden Schablone (7) und einem damit zusammenwirkenden Fühler (6), welcher bezüglich der Werkzeugeinheit (2) ortsfest angeordnet und bei einer Absenkbewegung der Werkzeugeinheit (2) in die jeweilige Aufnahme (12) der Schablone (7) eintauchbar ist, dadurch gekennzeichnet, daß der Fühler (6) der Abtasteinrichtung (5) zusammen mit der Werkzeugeinheit (2) um eine bezüglich der Aufnahmeebene für die Werkstücke (20, 21) im wesentlichen normale Achse (8) verschwenkbar ist, welche am freien Ende eines Schwenkarms (10) gehalten ist, der seinerseits an einer im seitlichen Abstand und im wesentlichen achsparallel zur Achse (8) angeordneten zweiten Schwenkachse (9) gelagert ist, und daß der Fühler (6) der Abtasteinrichtung (5) und das Werkzeug (1) bzw. die Werkzeugachse jeweils im Abstand zur normalen Achse (8) an einem Schenkel eines Halteteils (11) angeordnet sind, wobei sich der Fühler (6) außerhalb des Aufspannbereiches für die Werkstücke (20, 21) befindet.

2. Vorrichtung nach Anspruch 1, dadurch gekennzeichnet, daß der Fühler (6) lösbar in einer Halterung (27) aufgenommen ist, in welche, ggf. mittels einer Bohrbüchse, eine Bohreinheit zum Bohren bzw. Fräsen der Ausnehmungen (12) in die Schablone (7) einsetzbar ist.

3. Vorrichtung nach Anspruch 1 oder 2, dadurch gekennzeichnet, daß die Werkzeugeinheit (2) mit dem Fühler (6) der Abtasteinrichtung (5) radial zur Schwenkachse (9) verfahrbar ist.

4. Vorrichtung nach einem der Ansprüche 1 bis 3, dadurch gekennzeichnet, daß das Halteteil (11) für die Werkzeugeinheit (2) und die Abtasteinrichtung (5) an der einen Schwenkachse (8) gelagert und längs der Drehachse (8) verschiebbar ist.

5. Vorrichtung nach einem der Ansprüche 1 bis 4, dadurch gekennzeichnet, daß der Fühler (6) als sich in vertikaler Richtung erstreckender Taststift ausgebildet ist mit vorzugsweise konisch sich verjüngendem Stiftende.

6. Vorrrichtung nach einem der Ansprüche 1 bis 5, dadurch gekennzeichnet, daß die Schablone (7) mit die Ausnehmungen (12) auf einem im wesentlichen geschlossenen Weg miteinander verbindenden Führungsschienen, Anschlägen o. dgl. Führungseinrichtungen für den Fühler (6) bzw. den Taststift versehen ist.

7. Vorrichtung nach einem der Ansprüche 1 bis 6, dadurch gekennzeichnet, daß der vorzugsweise höhenverstellbare Taststift (6) und die Schablone (7) bezüglich der Aufnahmeebene der Werkstücke derart angeordnet sind, daS der Taststift (6) bei einem relativ zur Arbeitsstellung des Werkzeuges (1) geringeren Absenkhub in die jeweilige Ausnehmung (12) der Schablone (7) eingreift.

8. Vorrichtung nach einem der Ansprüche 1 bis 7, dadurch gekennzeichnet, daß die Werkzeugeinheit (2) mit der Abtasteinrichtung (5) gegen die Kraft eines Federspeichers in Arbeitsstellung absenkbar ist.

9. Vorrichtung nach Anspruch 8, dadurch gekennzeichnet, daß der Federspeicher als zwischen des Schwenkarms (10) und dem Halteteil (11) eingespannte Druckfeder (13) ausgebildet ist.

10. Vorrichtung nach einem der Ansprüche 1 bis 9, dadurch gekennzeichnet, daß das Halteteil (11) für die Werkzeugeinheit (2) und die Abtasteinrichtung (5) mittels wenigstens einem Hülsenteil (14) verdrehbar und längsverschieblich an der Drehachse (8) zwischen zwei in Abstand übereinander die Drehachse (8) fixierenden Wandungsfortstätzen (16, 17) der Schwenkarm (10) gehalten ist.

11. Vorrichtung nach Anspruch 9 oder 10, dadurch gekennzeichnet, daß die Druckfeder (13) auf die Drehachse (8) aufgeschoben ist und sich unter Ausübung einer Druckkraft auf den wenigstens einen Hülsenteil (15) in Richtung der oberen Ausgangsstellung des Halteteils (11) an einem der Wandungsfortsätze (16, 17) des Schwenkarms (10) abstützt.

12. Vorrichtung nach einem der Ansprüche 1 bis 11, dadurch gekennzeichnet, daß die Werkzeugeinheit (2) mit Abtasteinrichtung (5) mittels eines sich am Grundgestell (4) abstützenden und um eine vertikale Achse (18) verschwenkbaren Gelenkhebels, vorzugsweise mittels eines Kniehebels (19), absenkbar ist.

13. Vorrichtung nach einem der vorhergehenden Ansprüche, dadurch gekennzeichnet, daß die Aufnahme (3) für die Werkstücke als Spann- und/oder Klemmeinrichtung ausgebildet ist.

## Claims

1. Device for the production of a given drilling or milling pattern in workpieces of wood, synthetic material or metal, such as for example the bores for threaded bolts of hinge plates in profiles of doors and/or door frames, with a base frame (4) displaying a receptacle (3) for the fixing of the workpieces, a tool unit (2), which is retained at the base frame (4), displays at least one drilling and/or milling tool (1) and is lowerable for the machining of workpieces, and a scanning equipment (5) with a template (7), which reproduces the respective drilling or milling pattern in the shape of recesses (12), and a feeler (6), which co-operates therewith, is arranged in fixed location relative to the tool unit (2) and enterable into the respective recess (12) of the template (7) on a lowering movement of the tool unit (2), characterised thereby, that the feeler (6) of the scanning equipment (5) is pivotable together with the tool unit (2) about an axle (8), which is substantially normal to the receiving plane for the workpieces (20, 21) and retained at the free end of a pivot arm (10), which is in its turn borne at a second pivot axle (9) arranged at a lateral spacing from and substantially parallel axially to the axle (8), and that the feeler (6) of the scanning equipment (5) and the tool (1) or the tool axis are arranged at a limb of a retaining part (11) each time at a spacing from the normal axle (8), wherein the feeler (6) is disposed outside the clamping region for the workpieces (20, 21).

2. Device according to claim 1, characterised thereby, that the feeler (6) is detachably received in a mount (7), into which a drilling unit for the drilling or milling of the recesses (12) is insertable into the template (7), in a given case by means of a drill bush.

3. Device according to claim 1 or 2, characterised thereby, that the tool unit (2) with the feeler (6) of the scanning equipment (5) is movable radially relative to the pivot axle (9).

4. Device according to one of the claims 1 to 3, characterised thereby, that the retaining part (11) for the tool unit (2) and the scanning equipment (5) is borne at the one pivot axle (8) and displaceable along the rotational axle (8).

5. Device according to one of the claims 1 to 4, characterised thereby, that the feeler (6) is formed as a scanning pin extending in vertical direction and with a pin end preferably narrowing conically.

6. Device according to one of the claims 1 to 5, characterised thereby, that the template (7) is provided with guide rails connecting the recesses (12) together over a substantially closed path and with abutments or the like guide equipments for the feeler (6) or the scanning pin.

7. Device according to one of the claims 1 to 6, characterised thereby, that the scanning pin (6), which is preferably displaceable vertically, and the template (7) are arranged in such a manner relative to the receiving plane of the workpieces that the scanning pin (6) engages into the respective recess (12) of the template (7) for a lowering stroke which is smaller relative to the operative setting of the tool (1).

8. Device according to one of the claims 1 to 7, characterised thereby, that the tool unit (2) with the scanning equipment (5) is lowerable into the operative setting against the force of a spring storage device.

9. Device according to claim 8, characterised thereby, that the spring storage device is constructed as compression spring clamped in between the pivot arm (10) and the retaining part (11).

10. Device according to one of the claims 1 to 9, characterised thereby, that the retaining part (11) for the tool unit (2) and the scanning equipment (5) is retained by means of at least one sleeve part (14) to be rotatable and longitudinally displaceable at the rotational axle (8) between two wall surface prolongations (16, 17), which at a spacing one above the other fix the rotational axle (8), of the pivot arm (10).

11. Device according to claim 9 or 10, characterised thereby, that the compression spring (13) is pushed onto the rotational axle (8) and bears against one of the wall surface prolongations (16, 17) of the pivot arm (10) whilst exerting a pressure force on the at least one sleeve part (15) in the direction of the upper starting position of the retaining part (11).

12. Device according to one of the claims 1 to 11, characterised thereby, that the tool unit (2) with the scanning equipment (5) is lowerable by means of a jointed lever, preferably by means of a toggle lever (19), which bears against the base frame (4) and is pivotable about a vertical axle (18).

13. Device according to one of the preceding claims, characterised thereby, that the receptacle (3) for the workpieces is constructed as tightening and/or clamping equipment.

## Revendications

1. Dispositif pour la réalisation d'un dessin prédéfini de perçage ou de fraisage dans des pièces en bois, en matière plastique ou en métal, par exemple la réalisation de perçages pour les boulons dans des profilés de porte et/ou d'encadrement de porte, comprenant un bâti (4) comprenant un support (3) pour l'immobilisation des pièces à usiner, une unité d'outil (2) maintenue sur le bâti (4), portant au moins un outil de perçage et/ou de fraisage (1) et pouvant être abaissée en vue de l'usinage des pièces à usiner, et un dispositif palpeur (5) comportant un gabarit (7) reproduisant le dessin de perçage ou de fraisage correspondant sous forme d'évidements (12) ménagés dans le gabarit, et un palpeur (6) coopérant avec ce dernier, qui est stationnaire par rapport à l'unité d'outil (2) et plonge, lors d'un mouvement d'abaissement de l'unité d'outil (2), dans l'évidement correspondant (12) du gabarit (7),
caractérisé en ce que le palpeur (6) du dispositif palpeur (5) pivote, simultanément avec l'unité d'outil (2), autour d'un axe (8) essentiellement perpendiculaire au plan de support des pièces à usiner (20, 21), cet axe étant fixé à l'extrémité libre d'un bras pivotant (10), qui est lui-même logé sur un deuxième axe de pivotement (9) disposé à une certaine distance latérale par rapport à l'axe (8), et de façon axialement essentiellement parallèle à celui-ci, et en ce que le palpeur (6) du dispositif palpeur (5) et l'outil (1), respectivement l'axe de l'outil, sont respectivement disposés à une distance de l'axe normal (8) sur une branche d'un élément de support (11), le palpeur (6) se situant à l'extérieur de la zone de fixation des pièces à usiner (20, 21).

2. Dispositif selon la revendication 1, caractérisé en ce que le palpeur (6) est reçu de façon démontable dans un support (27), dans lequel on peut installer, par l'intermédiaire d'une douille de perçage s'il y a lieu, une unité de perçage prévue pour le perçage ou le fraisage des évidements (12) dans le gabarit (7).

3. Dispositif selon la revendication 1 ou 2, caractérisé en ce que l'unité d'outil (2) et le palpeur (6) du dispositif (5) peuvent être déplacés radialement par rapport à l'axe de pivotement (9).

4. Dispositif selon l'une des revendications 1 à 3, caractérisé en ce que l'élément de support (11) de l'unité d'outil (2) et le dispositif palpeur (5) sont logés sur l'axe de pivotement (8) et peuvent coulisser le long de l'axe de rotation (8).

5. Dispositif selon l'une des revendications 1 à 4, caractérisé en ce que le palpeur (6) est réalisé sous forme d'un doigt palpeur s'étendant verticalement, présentant une extrémité de doigt de préférence effilée en forme de cône.

6. Dispositif selon l'une des revendications 1 à 5, caractérisé en ce que le gabarit (7) est doté de rails de guidage, de butées, ou d'éléments de guidage similaires pour le palpeur (6), respectivement le doigt palpeur, reliant les évidements (12) en un chemin essentiellement fermé.

7. Dispositif selon l'une des revendications 1 à 6, caractérisé en ce que le doigt palpeur (6) de préférence réglable en hauteur, et le gabarit (7), sont positionnés par rapport au plan de support des pièces à usiner de manière telle que le doigt palpeur (6) s'engage dans l'évidement correspondant (12) du gabarit (7) dès une course de descente relativement peu importante à partir de la position de travail de l'outil (1).

8. Dispositif selon l'une des revendications 1 à 7, caractérisé en ce que l'unité d'outil (2) et le dispositif palpeur (5) peuvent être abaissés dans leur position de travail à l'encontre de la force d'un accumulateur à ressort.

9. Dispositif selon la revendication 8, caractérisé en ce que l'accumulateur à ressort est réalisé sous forme d'un ressort de pression (13) fixé entre le bras pivotant (10) et l'élément de support (11).

10. Dispositif selon l'une des revendications 1 à 9, caractérisé en ce que l'élément de support (11) de l'unité d'outil (2) et le dispositif palpeur (5) sont maintenus sur l'axe de rotation (8) au moyen d'au moins un élément douille (14), de manière à pouvoir tourner et coulisser longitudinalement, entre deux prolongements de paroi (16, 17) du bras pivotant, disposés à une certaine distance l'un au-dessus de l'autre, fixant l'axe de rotation (8).

11. Dispositif selon la revendication 9 ou 10, caractérisé en ce que le ressort de pression (13) est emmanché sur l'axe de rotation (8) et s'appuie sur l'un des prolongements de paroi (16, 17) du bras pivotant (10), en exerçant sur au moins un élément douille (15) une force de pression dirigée vers la position supérieure de départ de l'élément de support (11).

12. Dispositif selon l'une des revendications 1 à 11, caractérisé en ce que l'unité d'outil (2) et le dispositif palpeur (5) peuvent être abaissés au moyen d'un levier articulé, de préférence au moyen d'un levier à genouillère (19) s'appuyant sur le bâti (4) et pivotant autour d'un axe vertical (18).

13. Dispositif selon l'une des revendications précédentes, caractérisé en ce que le support (3) pour les pièces à usiner est réalisé sous forme d'un dispositif de serrage et/ou de bridage.
